Europäisches Patentamt

European Patent Office

Office européen des brevets

(11) Numéro de publication: **0 458 666 B1**

# FASCICULE DE BREVET EUROPEEN

(45) Date de publication de fascicule du brevet: **05.07.95**   (51) Int. Cl.⁶: $F16J\ 12/00$, F16L 11/115

(21) Numéro de dépôt: **91401030.1**

(22) Date de dépôt: **18.04.91**

(54) **Procédé de fabrication d'une structure creuse utilisable notamment pour le stockage de fluides sous pression.**

(30) Priorité: **26.04.90 FR 9005507**

(43) Date de publication de la demande:
**27.11.91 Bulletin  91/48**

(45) Mention de la délivrance du brevet:
**05.07.95 Bulletin  95/27**

(84) Etats contractants désignés:
**BE DE DK ES GB IT LU NL SE**

(56) Documents cités:
**DE-U- 8 518 194**
**US-A- 4 576 015**

(73) Titulaire: **INSTITUT FRANCAIS DU PETROLE**
**4, avenue de Bois Préau**
**F-92502 Rueil-Malmaison (FR)**

(72) Inventeur: **Huvey, Michel**
**2, avenue des Pinsons**
**F-78380 Bougival (FR)**
Inventeur: **Le Page, Jean-François**
**13, Rue des Primevères**
**F-92500 Rueil Malmaison (FR)**

EP 0 458 666 B1

**Description**

Il est connu de transporter des gaz comprimés dans des bouteilles étanches résistant à la pression. Ces bouteilles sont le plus souvent en acier, et le poids des récipients représente de près de 10 à plus de 15 fois le poids du gaz comprimé transporté lorsque la bouteille est pleine. Le poids d'une bouteille unitaire est limité par la nécessité de pouvoir la manipuler manuellement, lorsqu'elle doit pouvoir être placée dans des lieux non accessibles par des moyens mécaniques.

Lorsque l'utilisateur dispose de moyens mécaniques de manutention, ou lorsque l'emplacement d'utilisation est directement accessible par les camions de livraison, ces bouteilles sont souvent rassemblées en un ensemble compact appelé "CADRE". De tels cadres ont des poids très importants, par exemple un peu plus de 20 kN pour un cadre contenant 189 m$^3$ TPN d'azote sous 20 MPa de pression (poids de l'azote contenu : 236 daN).

De tels cadres constituant des ensembles unitaires non dissociables, il apparaît qu'ils peuvent être réalisés de façon totalement différente, et non par rassemblement de bouteilles unitaires standard.

Un des problèmes que l'on rencontre lorsque l'on désire augmenter le diamètre des bouteilles pour accroître leur capacité à longueur constante est celui des fonds, qui doivent être hémisphériques pour présenter un poids minimum à capacité donnée, et plats pour la facilité de manutention, au moins en ce qui concerne le fond inférieur.

Comme la facilité de manutention est l'impératif dominant, le fond inférieur est donc plat ou quasiment plat, et son épaisseur ne croît pas comme le diamètre du récipient, mais comme son cube, pour conserver des déformations acceptables. Par suite, le poids du récipient croît beaucoup plus vite que la capacité unitaire de la bouteille.

Le procédé selon l'invention permet d'obtenir des cadres de même capacité mais beaucoup plus légers avec un encombrement comparable, ou des cadres de même poids, mais de capacité très largement supérieure.

D'autres applications des structures obtenues conformément au procédé selon l'invention peuvent bien entendu être réalisées sans sortir du cadre de l'invention.

Il est basé sur l'utilisation d'un récipient de grande longueur et de faible diamètre, pouvant être enroulé hélicoïdalement sur une bobine, dont le noyau central peut lui même être une bouteille standard, ou un récipient léger de conception plus récente.

Un des problèmes que l'on rencontre lors de l'utilisation d'un tube enroulé lorsqu'on le soumet à une pression interne est sa tendance naturelle à se redresser, ce phénomène étant lié à l'ovalisation que prend le tube lorsqu'on le cintre pour le mettre en place sur la bobine.

Sous l'effet de la pression interne, il cherche à retrouver une section de forme circulaire, ceci ne pouvant être obtenu que par ouverture des spires.

Il est pratiquement impossible d'enrouler un tube en matériau homogène sans l'ovaliser, ce qui en fait un ressort extrêmement dangereux s'il est maintenu en position courbe sous pression. Par ailleurs, même maintenu courbe, le petit axe de l'ellipse correspondant à une section droite du tube ovalisé a tendance à gonfler de façon importante pour rechercher la section circulaire lorsqu'il est mis sous pression interne, ce qui fait que le gonflement radial (par rapport à la bobine) est très important.

Il est par suite nécessaire de réserver des espaces importants entre deux couches de tube pour permettre la respiration de ce genre de tube.

Ces limitations font qu'un tel stockage, sous forme d'un tube enroulé sur une bobine, n'a jamais été utilisé.

Le brevet FR-2.553.860 décrit des tubes flexibles de structure ondulée dont les portions externes creuses sont garnies, sur au moins une partie de leur hauteur, d'un élément de renfort pouvant comporter des matériaux fibreux. De tels tubes ondulés armés présentent la particularité de conserver une section circulaire lorsqu'ils sont courbés, et ne développent par conséquent pas de couple de redressement lorsqu'ils sont mis sous pression en position courbe.

Pour la même raison, leur variation de diamètre dans le sens radial de la bobine se limite à l'allongement du renfort circonférenciel du tube onduleux, de l'ordre de 1 % dans le cas où le renfort est constitué de fibres de verre E, et plus faible en cas d'utilisation de fibres de carbone.

Les espaces à réserver diamétralement seront donc beaucoup plus faibles, et l'interposition, entre le noyau et la première couche de tube, d'une couche d'un élastomère, puis entre la première et la deuxième couche, et ainsi de suite, permettra la respiration normale du tube. Si le tube renforcé comporte une gaine élastomèrique d'étanchéité, celle-ci pourra, par sa déformation locale, assurer la compensation des variations de diamètre du tube entre son état au repos et son état sous pression.

2

Il a toutefois été constaté qu'un tel tube ondulé armé circonférenciellement et longitudinalement voyait ses propriétés de résistance à la pression interne baisser de façon importante lorsqu'il est fabriqué en position droite comme décrit dans le brevet précité et utilisé en position très fortement courbée, comme c'est le cas pour les couches internes dans une installation de stockage transportable telle qu'elle peut être obtenue selon l'invention.

Le procédé de l'invention permet de fabriquer une structure creuse, utilisable notamment pour le stockage de fluides sous pression qui, bien que se présentant sous forme d'une pluralité de spires d'un tube courbé, présente une résistance à la pression interne élevée.

Il permet également la réalisation de tubes de transfert de fluides sous pression ne présentant que très peu de pertes de résistance à la pression lorsqu'ils comportent des zones présentant de très faibles rayons de courbure, lorsque ces zones peuvent être déterminées à l'avance, ce qui est le cas, par exemple, de tubes destinés à être placés de façon définitive dans une structure telle qu'une tranchée ou l'ossature d'un bâtiment ou de stockage de fluide sous pression dans un véhicule par exemple en utilisant les espaces creux de l'ossature d'un véhicule.

Le procédé de fabrication comprend les étapes successives suivantes:

a) on garnit, sur au moins une partie de leur hauteur, les portions externes creuses d'un tube flexible de structure ondulée, par une composition comportant une résine durcissable renforcée de fibres,

b) on courbe le tube ainsi garni sur au moins une partie de sa longueur de manière à le disposer selon une forme correspondant à l'utilisation qui en sera faite, et

c) on soumet le tube ainsi courbé sur au moins une partie de sa longueur à un traitement permettant le durcissement de la composition durcissable.

Selon des modalités préférées de réalisation, dont certaines peuvent être réalisées simultanément:

- on recouvre le tube flexible garni de la composition durcissable d'une gaine de matériau substantiellement non perméable à ladite résine, de manière à maintenir celle-ci sensiblement en place dans lesdites portions externes creuses du tube ondulé, avant de procéder à l'enroulement dudit tube,

- la résine est une résine thermodurcissable et l'étape (c) est réalisée par chauffage dudit ensemble jusqu'à une température permettant le durcissement de la résine.

La résine, lors de l'imprégnation, renferme un matériau de réticulation, et l'ensemble est maintenu à l'étape (c) dans des conditions permettant à la réticulation de se produire

- après l'étape (a) et avant l'étape (b), on dispose autour du tube garni de composition durcissable et muni ou non de la gaine de matière substantiellement non perméable à la résine, une couche de résistance mécanique plus élevée que celle de ladite gaine

- ladite couche est constituée d'une tresse de fibres de résistance mécanique élevée

- la forme d'utilisation peut être constituée d'une pluralité de spires enroulées sur un tambour

- le rayon de courbure du tube, lors de la formation des spires, est choisi de manière à rapprocher les ondulations les plus proches de l'axe d'enroulement et à écarter les ondulations les plus éloignées dudit axe, sans provoquer toutefois un écrasement du tube réduisant sensiblement son diamètre dans une direction perpendiculaire audit axe

- l'enroulement est effectué autour d'un conteneur creux sensiblement cylindrique, en communication avec ledit enroulement et pouvant constituer une partie du volume de stockage

- les extrémités du tube sont pourvues de systèmes permettant la communication avec l'extérieur ou la fermeture étanche.

L'invention n'est pas limitée à l'emploi d'une résine thermodurcissable particulière. On pourra par exemple mélanger une résine avec son durcisseur pour imprégner les filaments qui serviront à garnir les portions externes creuses du tube ondulé, et chauffer ensuite, en position courbe du tube. On peut aussi réaliser une vulcanisation en garnissant les ondes de filaments préalablement imprégnés de latex additionné de soufre et en chauffant après enroulement du tube. On peut ainsi utiliser une résine formo-phénolique, une résine mélamine formaldéhyde, une résine urée-formaldéhyde, une résine époxyde, une résine polyester ou vinylester, ou une résine alkyde, ou mettre en place dans les portions externes creuses du tube ondulé des mèches constituées d'un mélange de fibres renforçantes et de fibres thermoplastiques fusibles telles que des fibres de polyamide ou de polyéthylène, ou des mèches de fibres renforçantes garnies de poudre de résine thermoplastique fusible, puis, après enroulement, procéder à un traitement thermique permettant d'obtenir la fusion du thermoplastique avant de procéder au refroidissement assurant le durcissement de l'ensemble.

Ladite gaine déposée éventuellement peut être un simple enroulement hélicoïdal d'une bande de matériau plastique ou élastomèrique dont l'épaisseur peut être faible, puisque cette bande, après durcissement de la résine, n'a normalement plus de rôle à jouer.

Les figures 1 à 3 illustrent l'invention.

La figure 1 montre en coupe une portion droite de tube ondulé, selon l'axe longitudinal XX′ de ce tube.

La figure 2 montre en coupe la même portion de tube ondulé après enroulement autour d'un axe Z.

La figure 3 montre une structure de stockage de fluides telle qu'obtenue par le procédé de l'invention.

Sur ces figures, dans un but de simplification, on n'a pas représenté les extrémités libres du tube, qui peuvent être équipées de raccords, tels ceux du brevet Français FR-2.604.768.

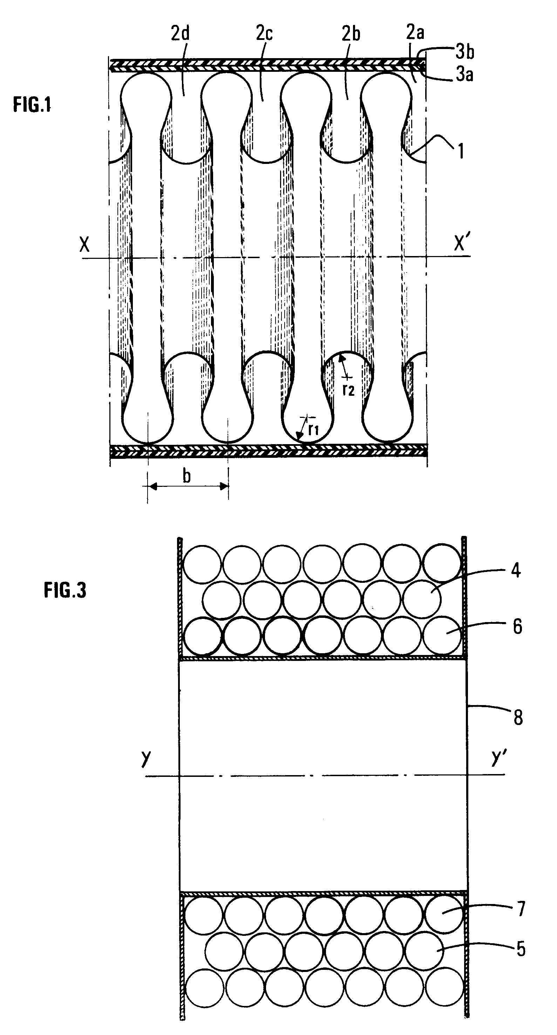

Sur la figure 1, la totalité des portions creuses (2a, 2b, 2c) du tube ondulé droit sont remplies de résine, mais on peut également ne remplir qu'une partie, à partir du fond, jusqu'à la zone où le rayon de courbure de la zone externe de l'ondulation de la gaine devient sensiblement constant.

Les croix situent les centres des portions de cercle successives qui contituent l'onde, ces portions de cercle pouvant être séparées, ou non, par des portions sensiblement rectilignes vues en coupe, et correspondant à des zones sensiblement coniques, en représentation spatiale.

La forme représentée, en demi cercles successifs, n'est pas obligatoire et toute autre forme peut être utilisée, pourvu qu'elle présente des cannelures. Une structure de type "accordéon" peut ainsi être utilisée.

Dans ce cas, la portion creuse pourra être garnie sur sensiblement toute sa hauteur.

Si l'on considère les portions creuses et en relief successives, elles peuvent constituer des anneaux successifs, ou adopter une forme hélicoïdale.

La forme support de l'enroulement, lorsqu'elle est matérielle, peut prendre la forme d'un tambour présentant un rayon constant, mais peut également prendre des formes différentes, telle qu'un tambour ovale, un mannequin, ou même présenter des portions droites suivies de portions à fort rayon de courbure, telle qu'un cadre métallique creux ou une tranchée creusée en environnement urbain.

Lors de la fabrication, on part du tube ondulé droit 1, et on dépose au moins un élément de renfort imprégné d'une résine durcissable dans les portions creuses (2a,2b,2c) de ce tube. On peut recouvrir le tout d'une couche protectrice, par exemple une bande mince de caoutchouc enroulée hélicoïdalement(3a) et une armature de renfort longitudinal, par exemple une tresse de fils métalliques (3b).

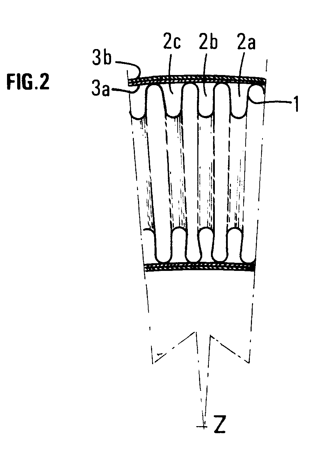

On enroule le tube 1 autour d'un tambour dont l'axe, perpendiculaire à la figure, passe par le point Z (fig 2) de l'axe Y′Y (fig 3). Comme la résine n'a pas pris sa forme définitive, l'élément de renfort imprégné est encore déformable, et la forme de sa section, initialement telle que sur la figure 1, prend un aspect semblable à celui de la figure 2.

L'ensemble tambour support quand il est présent, et tube enroulé est alors soumis au traitement de durcissement.

Le traitement de durcissement, lorsqu'il résulte d'une élévation temporaire de la température, peut être effectué en enfermant l'ensemble ainsi constitué dans une étuve, mais il peut aussi être effectué, par exemple, en envoyant à l'intérieur du tube un fluide à la température de traitement et sous une pression telle que la gaine seule, renforcée seulement par l'armature longitudinale telle que la tresse métallique, puisse la supporter, pendant la durée nécessaire au traitement.

A titre d'élément de comparaison de l'art antérieur, un tube de diamètre intérieur 49 mm, de diamètre extérieur 56 mm, constitué d'une feuille ondulée de polyfluorure de vinylidène de 0,5 mm d'épaisseur, dont les portions creuses externes sont garnies sur la presque totalité de leur hauteur, de fibres de verre E imprégnées d'une composition époxyde, l'imprégnation ayant été réalisée conformément au procédé décrit dans le brevet français FR-2.630.464, le durcissement ayant été effectué de façon conventionnelle, ledit tube ayant été ensuite armé longitudinalement d'une tresse d'aramide, et équipé de raccords suivant le brevet français FR-2.604.768, présente une pression d'éclatement de 14 MPa lorsqu'il est sollicité en position droite (linéaire). L'éclatement intervient par percement de la gaine de polyfluorure de vinylidène au sommet de l'onde externe.

Fabriqué de la même façon, avec les mêmes produits, sa pression d'éclatement n'est plus que de 7 MPa lorsqu'il est sollicité en position courbe, avec un rayon de courbure de 35 cm (posé sur une bobine de diamètre de fût de 70 cm).

Il a été constaté que ce même tube, fabriqué avec les mêmes matériaux, et maintenu dans la même position courbe, avait une pression d'éclatement de 12 MPa (15 % de perte seulement au lieu de 50 %), si le processus de stabilisation (durcissement) de la résine époxyde, en l'occurence un chauffage en étuve, était effectué en positionnant le flexible non cuit en étuve, dans la position dans laquelle l'essai serait effectué, et en effectuant la stabilisation de la résine dans cette position.

Un flexible de même diamètre, réalisé avec une gaine d'acier inoxydable ondulée de 0,25 mm d'épaisseur, fabriqué, stabilisé et essayé en position droite, présente une pression d'éclatement de 63 MPa. Il est donc envisageable de s'en servir comme tube de stockage travaillant sous 20 à 21 MPa. Fabriqué et stabilisé droit, mais essayé courbe (même rayon de courbure que ci-dessus), sa pression d'éclatement est ramenée à 35 MPa, ce qui est trop peu pour une utilisation sous 20 à 21 MPa. Fabriqué droit, mais stabilisé après courbure, ce même flexible présente une pression d'éclatement de 60 MPa (la perte n'est plus que de 5 %), et peut être utilisé, avec une telle courbure, comme récipient de stockage pour des gaz comprimés sous 20 MPa.

Son poids, équipé de la tresse d'aramide et d'une gaine externe en caoutchouc de 1 mm d'épaisseur, est de 12,55 N/m, pour un volume interne de 2,015 dm$^3$/m. Pour disposer d'un volume interne de stockage de 1 m3, il faut utiliser 496 mètres de ce tube, représentant un poids de 623 daN.

Ce tube, enroulé sur une bobine de diamètre extérieur de fût de 0,5 m et de longueur de fût 1,85 mètre, se repartit sur six couches pour un diamètre externe légèrement inférieur à 1,2 m. Cette bobine, dont le fût et les joues sont réalisés en tôle d'acier de 5 mm d'épaisseur, pèse elle-même 186 daN. Avec ses raidisseurs et ses crochets de manutention, le dispositif porteur atteint un poids de 235 daN, ce qui fait un poids à vide total de 858 daN, se comparant avantageusement avec le poids à vide de 1784 daN du "cadre" classique, pourtant de capacité inférieure.

Les dispositifs de raccordement tels que décrits dans le brevet français FR-2.604.768 cité ci-dessus, sont destinés à assurer la constance du diamètre sur toute la longueur du tube, pour éviter toute perte de charge préjudiciable au bon écoulement des fluides. Ils seront utilisés préférentiellement lorsque le but du tube est de transférer des fluides.

D'autres systèmes de raccordement, moins coûteux et n'assurant qu'un passage de section réduite par rapport à la section du tube, mais du même ordre de grandeur que la section des conduites d'alimentation en gaz comprimés, peuvent être utilisés sans sortir du cadre de l'invention, lorsque la structure suivant l'invention est destinée au stockage de gaz comprimés.

Il est possible, lorsque la structure selon l'invention résulte de l'enroulement autour d'un axe de tube ondulé garni dans les portions externes creuses de composition durcissable, et avant ou après le traitement de durcissement, d'introduire une composition susceptible de s'expanser autour des spires de l'enroulement, et de procéder au moussage de cette composition. Si une telle composition moussante est réalisée à partir de résines phénoliques ou d'autres résines ayant un bon comportement en cas d'incendie, le stockage ainsi réalisé sera, au moins temporairement, protégé de l'échauffement en cas d'incendie.

L'invention sera mieux comprise en suivant l'exemple de réalisation ci-dessous indiqué.

Par des procédés connus par ailleurs, on réalise un tube ondulé dont l'onde, circonférencielle, présente les caractéristiques suivantes:

```
caractéristiques:                                      valeur

rayon interne de l'onde interne        r1              1,25 mm

rayon interne de l'onde externe        r2              1,25 mm

rayon interne du tube                  r3              24,5 mm

épaisseur de la gaine ondulée          a               0,25 mm

nature de la gaine ondulée                             acier inoxydable

module d'élasticité de la gaine ondulée                210.000 MPa

contrainte de rupture de la gaine ondulée              450 MPa

masse volumique de la gaine                            7.800 kg/m³

pas de l'ondulation                    b               5,5 mm
```

Au moyen d'un dispositif sans centre, on bobine en continu, dans le creux des ondes, une mèche de fibres de verre primprégnée sous vide d'une composition époxyde constituée de 100 parties de diglycidyléther de bisphénol A, auxquelles ont été ajoutées 90 parties d'anhydride méthylendométhylènetétrahydrophtalique et 2 parties de benzyldiméthylamine. Ce préimprégné a été conservé au congélateur à une température de -18°C depuis sa fabrication et mis à réchauffer à température ambiante une heure avant son utilisation.

On effectue autour de chaque onde un nombre de tours suffisant pour la remplir de manière pratiquement complète, puis on passe à l'onde suivante.

Après remplissage des ondes, le tube ondulé garni passe dans une rubanneuse qui le garnit d'une feuille mince d'un élastomère vulcanisé du type EPDM.

Le produit ainsi protégé contre l'écoulement de la résine passe dans une tresseuse qui forme autour de lui une tresse d'aramide, puis dans une rubanneuse qui dépose à sa surface un ruban de caoutchouc vulcanisé du type caoutchouc nitrile de 1 mm d'épaisseur.

Le tube ainsi constitué, et équipé à sa première extrémité d'un raccord bouché, est enroulé sur un tambour d'acier de diamètre intérieur 0,5 m et de longueur 1,85 m, équipé de joues circulaires de 1,2 m de diamètre externe. On place ainsi, en six couches, une longueur de tube de près de 500 mètres ayant un volume interne total de 1000 dm$^3$. La seconde extrémité est équipée d'un raccord muni d'un trou fileté permettant de recevoir une vanne, et disposé de facon à ce que ce trou fileté soit ultérieurement accessible sans difficulté, et l'ensemble est placé dans une étuve de dimensions suffisante, puis porté progressivement, à une vitesse de montée en température de 2°C par minute, jusqu'à une température de 140°C. Cette température est maintenue pendant une durée d'une heure, puis le chauffage est coupé et l'ensemble sorti de l'étuve. On place alors un bouchon fileté dans le trou fileté du raccord.

On place autour de cet ensemble un tube de polyéthylène de 2 mm d'épaisseur et de 1,3 mètre de diamètre, et l'on coule entre le tambour garni et le tube de polyéthylène une composition expansible à base de résine phénolique, qui vient occuper l'espace disponible entre le tube servant de réservoir et le tube de polyéthylène, et une partie de l'espace libre entre les différentes spires du tube.

On enlève alors le bouchon protecteur du trou fileté et place une vanne permettant un raccordement à un réseau d'eau pour garnir l'ensemble d'eau et effectuer un essai de pression interne à une pression de 30 MPa. Cette pression est soutenue sans modification dimensionnelle apparente de l'ensemble.

Le réservoir ainsi constitué est ensuite vidé de la plus grande partie de son eau, puis remis dans l'étuve qui a servi pour sa cuisson de façon à l'échauffer, et raccordé à une source de vide pour permettre le séchage total de la canalisation, avant d'être utilisable comme stockage de gaz comprimé sous 20 MPa de pression.

Les anneaux de matériau composite verre époxy constitués par l'enroulement de la composition ne sont pas de forme constante là où le tube est replié. Ils sont de section sensiblement constante, mais leur largeur (mesurée dans le sens longitudinal du tube) et leur hauteur (mesurée dans le sens radial du tube) varient de façon sensiblement inversement proportionnelle l'une par rapport à l'autre, la zone de l'anneau se trouvant dans la portion de tube dirigée vers le centre de la courbure ayant la section présentant la plus grande hauteur et la plus faible largeur, et la zone dirigée vers l'extérieur du tube présentant la plus grande largeur et la plus faible hauteur.

Dans le cas d'ondulations hélicoïdales la variation de largeur et, corrélativement, de hauteur, est sensiblement périodique.

**Revendications**

**1.** Procédé de fabrication d'une structure creuse, utilisable par exemple comme réservoir de fluides sous pression, selon lequel :

a) on garnit, sur au moins une partie de leur hauteur, les portions externes creuses (2a, 2b, 2c) d'un tube flexible (1) de structure ondulée, par une composition comportant une résine durcissable renforcée de fibres,

b) on courbe le tube ainsi garni sur une partie au moins de sa longueur, de manière à le disposer selon une forme correspondant à celle de son utilisation,

c) on soumet le tube ainsi courbé sur au moins une partie de sa longueur à un traitement permettant le durcissement de la composition durcissable.

**2.** Procédé selon la revendication 1, dans lequel on recouvre le tube (1) flexible garni de ladite composition durcissable renforcée de fibres, d'une gaine (3a) de matériau substantiellement non perméable à ladite résine, de manière à maintenir celle-ci sensiblement en place dans lesdites portions externes creuses du tube ondulé, avant de procéder à l'enroulement dudit tube.

**3.** Procédé selon l'une des revendications 1 ou 2, dans lequel la résine est une résine thermodurcissable et l'étape (c) est réalisée par chauffage dudit ensemble jusqu'à une température permettant le durcissement de la résine.

**4.** Procédé selon l'une des revendications 1 ou 2, dans lequel la résine, lors de l'imprégnation, renferme un matériau de réticulation, et l'ensemble est maintenu à l'étape (c) dans des conditions permettant à la réticulation de se produire.

**5.** Procédé selon l'une des revendications 1 à 4, dans lequel, après l'étape (a) et avant l'étape (b), on dispose autour du tube garni de composition durcissable et muni ou non de la gaine (3a) de matière substantiellement non perméable à la résine, une couche (3b) de résistance mécanique plus élevée que celle de la gaine (3a).

**6.** Procédé selon la revendication 5, dans lequel la couche (3b) est constituée d'une tresse de fibres de résistance mécanique élevée.

**7.** Procédé selon l'une des revendications 1 à 6, dans lequel la forme d'utilisation est constituée d'une pluralité de spires enroulées sur un tambour (8).

**8.** Procédé selon l'une des revendications 1 à 7, dans lequel le rayon de courbure du tube, lors de la formation des spires, est choisi de manière à rapprocher les ondulations les plus proches de l'axe d'enroulement et à écarter les ondulations les plus éloignées dudit axe, sans provoquer toutefois un écrasement du tube réduisant sensiblement son diamètre dans une direction perpendiculaire audit axe.

**9.** Procédé selon l'une des revendications 1 à 8, dans lequel l'enroulement est effectué autour d'un conteneur creux sensiblement cylindrique, en communication avec ledit enroulement et pouvant constituer une partie du volume de stockage.

**10.** Procédé selon l'une des revendications 1 à 9, dans lequel les extrémités du tube sont pourvues de systèmes permettant la communication avec l'extérieur ou la fermeture étanche.

**11.** Mise en oeuvre du procédé selon l'une des revendications 1 à 10 pour la fabrication d'un réservoir pour le stockage de gaz sous pression.

**Claims**

**1.** A method of manufacturing a hollow structure that may be used, for example, as a receptacle for pressurised fluids, whereby:
a) the external hollow portions (2a, 2b, 2c) of a flexible tube (1) of corrugated structure are filled over at least a part of their height with a composition comprising a fibre-reinforced curable resin,
b) the tube filled in this way is bent over at least a part of its length so as to conform to the requisite shape for its intended purpose,
c) having been bent in this manner over at least a part of its length, the tube is put through a process to set the curable composition.

**2.** A method as claimed in claim 1, in which the flexible tube (1) filled with the fibre-reinforced curable composition is covered with a sheath (3a) made from a material that is essentially impermeable to the resin so as to retain the resin substantially in place in the hollow, external portions of the corrugated tube, before proceeding to the winding of the tube.

**3.** A method as claimed in one of claims 1 or 2, in which the resin is a thermosetting resin and step (c) is carried out by heating the assembly to a temperature that will enable the resin to set.

**4.** A method as claimed in one of claims 1 or 2, in which the resin, during impregnation, contains a cross-linking material and the assembly is maintained at step (c) under conditions that will allow cross-linking to occur.

**5.** A method as claimed in one of claims 1 to 4, in which, after step (a) and before step (b), a layer (3b) with a greater mechanical resistance than that of the sheath (3a) is applied around the tube filled with the setting composition and the sheath (3a), if it has one, of material that is essentially impermeable to the resin.

**6.** A method as claimed in claim 5, in which the layer (3b) is made from a fibre braid with a high mechanical resistance.

7. A method as claimed in one of claims 1 to 6, in which the shape required for the intended purpose is a plurality of turns wound on a drum (8).

8. A method as claimed in one of claims 1 to 7, in which the radius of curvature of the tube, during the shaping of the turns, is selected so that it will be close to the corrugations nearest to the winding axis and farther away from the corrugations furthest from this axis, without however causing any crushing of the tube, which would cause a substantial reduction in its diameter in a direction perpendicular to the axis.

9. A method as claimed in one of claims 1 to 8, in which the winding is effected around a substantially cylindrical hollow container, communicating with this winding and possibly forming a part of the storage volume.

10. A method as claimed in one of claims 1 to 9, in which the ends of the tube are provided with systems to allow communication with the exterior or provide a sealed closure.

11. Implementation of a method as claimed in one of claims 1 to 10 to the manufacture of a receptacle for storing pressurised gas.

**Patentansprüche**

1. Verfahren zum Herstellen einer Hohlstruktur, die beispielsweise als Speicher für Fluide unter Druck verwendbar ist, wonach man:
   a) über wenigstens einen Teil ihrer Höhe die äußeren hohlen Teile (2a, 2b, 2c) eines flexiblen Rohres (1) gewellter Struktur mit einer Zusammensetzung, die ein mit Fasern verstärktes härtbares Harz umfasst, auskleidet
   b) das über wenigstens einen Teil seiner Länge ausgekleidete Rohr derart krümmt, daß man es gemäß einer Form entsprechend der seiner Verwendung anordnet, und
   c) das so gekrümmte Rohr über wenigstens einen Teil seiner Länge einer Behandlung, die die Härtung der härtbaren Zusammensetzung erlaubt, aussetzt.

2. Verfahren nach Anspruch 1, bei dem man das flexible mit dieser härtbaren Zusammensetzung, verstärkt durch Fasern, bekleidete Rohr (1) mit einer Hülle (3a) aus im wesentlichen für dieses Harz nicht-permeablen Material überdeckt, derart, daß dieses im wesentlichen am Ort in diesen äußeren hohlen Teilen des gewellten Rohrs gehalten wird, bevor das Wickeln dieses Rohres vorgenommen wird.

3. Verfahren nach einem der Ansprüche 1 oder 2, bei dem das Harz ein in der Wärme härtbares Harz ist und die Stufe (c) durch Erwärmen dieser Gesamtheit bis auf eine Temperatur durchgeführt wird, die das Härten des Harzes ermöglicht.

4. Verfahren nach einem der Ansprüche 1 oder 2, bei dem das Harz bei der Imprägnierung ein Vernetzungsmaterial einschließt und das Gesamte in der Stufe (c) unter Bedingungen gehalten wird, die es erlauben, daß sich die Vernetzung einstellt.

5. Verfahren nach einem der Ansprüche 1 bis 4, bei dem man nach der Stufe (a) und vor der Stufe (b) um das mit der härtbaren Zusammensetzung verkleidete Rohr, das darüber hinaus gegebenenfalls mit der Umhüllung (3a) aus dem für Harz im wesentlichen nicht-permeablen Material versehen ist, eine Schicht (3b) von einer mechanischer Festigkeit, die höher als die der Umhüllung (3a) ist, anordnet.

6. Verfahren nach Anspruch 5, bei dem die Schicht (3b) gebildet wird aus einem Geflecht von Fasern erhöhter mechanischer Festigkeit.

7. Verfahren nach einem der Ansprüche 1 bis 6, bei dem die Benutzungsform gebildet wird durch eine Vielzahl von auf eine Trommel (8) gewickelten Windungen.

8. Verfahren nach einem der Ansprüche 1 bis 7, bei dem der Krümmungsradius des Rohres bei der Bildung der Windungen derart gewählt wird, daß die der Wickelachse am nächsten befindlichen Wellungen aneinander angenähert werden und die von dieser Achse am weitesten entfernten Wellungen beabstandet werden, ohne jedoch ein Zerquetschen des Rohres hervorzurufen, indem sein Durchmesser in einer Richtung senkrecht zu dieser Achse vermindert wird.

9. Verfahren nach einem der Ansprüche 1 bis 8, bei dem die Wicklung um einen hohlen im wesentlichen zylindrischen in Verbindung mit dieser Wicklung stehenden Behälter, der auch einen Teil des Speichervolumens bilden kann, vorgenommen wird.

10. Verfahren nach einem der Ansprüche 1 bis 9, bei dem die Enden des Rohres mit Systemen versehen sind, die die Verbindung nach außen oder das dichte Schließen ermöglichen.

11. Durchführung des Verfahrens nach einem der Ansprüche 1 bis 10 zur Herstellung eines Speichers für das Lagern von Gasen unter Druck.

FIG.1

FIG.3

FIG.2